# EUROPÄISCHE PATENTANMELDUNG

(11) **EP 1 914 676 A1**
(43) Veröffentlichungstag der Anmeldung: **23.04.2008**
(21) Anmeldenummer: 07118794.2
(22) Anmeldetag: 18.10.2007
(51) Int. Cl.: G06Q 20/00, G07G 1/14

(54) **Verfahren zum Verifizieren und Freigeben von Legitimationsausweisen**

(30) Priorität: 20.10.2006 DE 102006050390
(71) Anmelder: Xsmart AG, 8320 Fehraltorf (CH)
(72) Erfinder: Kocher, Markus, 74199 Untergruppenbach (DE)
(74) Vertreter: Bongen, Renaud & Partner

(57) **Zusammenfassung**

Die vorliegende Erfindung betrifft ein Verfahren,
- bei dem ein Servicesystem (2) einem Legitimationsausweis (6), wie z.B. Zahlungsbeleg, Coupon, Gutschein und der gleichen, eine individuelle Ausweis-ID (7) zuordnet,
- bei dem eine Nachricht, die den die Ausweis-ID (7) aufweisenden Legitimationsausweis (6) darstellt, an eine mobile Telekommunikationseinrichtung (3), z.B. Mobiltelefon, eines Kunden gesendet wird,
- bei dem die Ausweis-ID (7) in eine Eingabeeinrichtung (4) einer den Legitimationsausweis (6) akzeptierenden Akzeptanzstelle (11) eingegeben wird,
- bei dem eine die Ausweis-ID (7) umfassende Information an das Servicesystem (2) gesendet wird,
- bei dem der Legitimationsausweis (6) durch das Servicesystem (2) anhand der Ausweis-ID (7) verifiziert wird,
- bei dem eine eine Freigabe des Legitimationsausweises (6) repräsentierende Information an die Eingabeeinrichtung (4) gesendet wird,
- bei dem der Legitimationsausweis (6) durch die Eingabeeinrichtung (4) freigegeben wird.

## Beschreibung

Die vorliegende Erfindung betrifft ein Verfahren zum Verifizieren und Freigeben von in einer mobilen Telekommunikationseinrichtung, wie z.B. ein Mobiltelefon, gespeicherten Legitimationsausweisen, wie z.B. Zahlungsbelege, Coupons, Gutscheine und dergleichen, bei einer Akzeptanzstelle für derartige Legitimationsausweise.

Aus der DE 101 39 175 B4 ist ein Verfahren zum Erstellen derartiger Legitimationsausweise mittels einer Telekommunikationseinrichtung bekannt, bei dem nach Durchführung des Verfahrens der erstellte Legitimationsausweis z.B. in einem Mobiltelefon gespeichert ist.

Beispielsweise handelt es sich bei einem derartigen Legitimationsausweis um einen Zugfahrschein, den der Kunde mit Hilfe eines Mobiltelefons bei einem entsprechenden Servicesystem beschafft hat und der in der Folge in seinem Mobiltelefon, z.B. als Kurznachricht gespeichert ist und bei Bedarf aufgerufen und an einem Display des Mobiltelefons darstellbar ist. Der virtuelle Zugfahrschein bzw. der Legitimationsausweis kann beispielsweise dadurch verifiziert werden, dass der jeweilige Kontrolleur bei dem den Legitimationsausweis ausstellenden Servicesystem eine entsprechende Datenabfrage durchführt.

Die vorliegende Erfindung beschäftigt sich mit dem Problem, die Anwendungsmöglichkeiten von Legitimationsausweisen, die in mobilen Telekommunikationseinrichtungen gespeichert sind, auszuweiten bzw. die Verwendung von in mobilen Telekommunikationseinrichtungen gespeicherten Legitimationsausweisen zu verbessern, insbesondere zu vereinfachen.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Legitimationsausweis mit Hilfe einer möglichst einfach aufgebauten Ausweisidentifikation, kurz Ausweis-ID, zu individualisieren. Diese Ausweis-ID wird zusammen mit dem Legitimationsausweis bzw. als Bestandteil des Legitimationsausweises in Form einer entsprechenden Nachricht an die mobile Telekommunikationseinrichtung des jeweiligen Kunden gesendet. An einer Akzeptanzstelle für derartige Legitimationsausweise kann nun der jeweilige Legitimationsausweis besonders einfach verifiziert und freigegeben werden, indem hierfür eine bei einer derartigen Akzeptanzstelle regelmäßig ohnehin vorhandene, weitgehend standardisierte Eingabeeinrichtung verwendet wird. Bei einer derartigen Eingabeeinrichtung handelt es sich vorzugsweise um eine sogenannte POS-Schnittstelle, wobei "POS" für "Point Of Sale" steht. Eine derartige Standard-Eingabeeinrichtung dient üblicherweise dazu, auf einer Zahlkarte, z.B. EC-Karte oder Kreditkarte, gespeicherte Daten einzulesen, um so einen bargeldlosen Zahlungsvorgang durchzuführen. Hierzu setzt sich die Eingabeeinrichtung mit einem Zahlungssystem, z.B. ein Bankrechner, in Verbindung, um beispielsweise die Gültigkeit der jeweiligen Zahlkarte zu prüfen und den Zahlvorgang zu bestätigen.

Bei der Erfindung wird nun diese regelmäßig ohnehin vorhandene Eingabeeinrichtung dazu genutzt, mit dem Servicesystem in Verbindung zu treten, das die Zuordnung zwischen dem Legitimationsausweis und der Ausweis-ID hergestellt hat oder zumindest kennt. Auf diese Weise kann durch Überprüfen der Ausweis-ID der jeweilige Legitimationsausweis verifiziert und gegebenenfalls freigeben werden. Bemerkenswert ist dabei, dass eine spezielle Leseeinrichtung zum Einlesen des Legitimationsausweises bzw. der Ausweis-ID aus der mobilen Telekommunikationseinrichtung nicht erforderlich ist.

Bei einer alternativen Ausführungsform beruht die Erfindung auf der Überlegung, den jeweiligen Legitimationsausweis jeweils einem bestimmten Kunden zuzuordnen, der über eine Kundenidentifikation, kurz Kunden-ID, individualisierbar ist. An der jeweiligen Akzeptanzstelle besteht für den Kunden nun die Möglichkeit, sich mit Hilfe einer Identifikationskarte, die in irgendeiner elektronisch einlesbaren Form die Kunden-ID aufweist, zu identifizieren. Zu diesem Zweck kann die Kunden-ID mit Hilfe einer an der jeweiligen Akzeptanzstelle regelmäßig ohnehin vorhandenen Einleseeinrichtung eingelesen werden. Die Einleseeinrichtung stellt dann eine Verbindung mit dem Servicesystem her, das dann den jeweiligen Legitimationsausweis anhand der Kunden-ID verifizieren und gegebenenfalls freigeben kann.

Bei der üblicherweise ohnehin vorhandenen, weitgehend standardisierten Einleseeinrichtung kann es sich grundsätzlich wieder um eine POS-Schnittstelle handeln, die sich in bekannter Weise dazu eignet, Daten von Zahlkarten einzulesen. Statt sich mit einem Zahlsystem in Verbindung zu setzen, setzt sich diese Standard-Einleseeinrichtung bei der Erfindung mit dem Servicesystem in Verbindung, um die Verifizierung und Freigabe des Legitimationsausweises durchzuführen. Alternativ kann es sich bei der Einleseeinrichtung auch um einen üblichen Laserscanner handeln, wie er z.B. im Einzelhandel an Kassensystemen regelmäßig anzufinden ist. Die Kunden-ID ist dann beispielweise in Form eines Strichcodes auf der jeweiligen Identifikationskarte gespeichert. Das Kassensystem kann dann mit dem Servicesystem in der Verbindung treten, um den Abgleich der Kunden-ID für die Verifikation und Freigabe des jeweiligen Legitimationsausweises durchzuführen.

Bei der Identifikationskarte des jeweiligen Kunden kann es sich beispielsweise um eine spezielle Kundenkarte handeln, die z.B. die jeweilige Akzeptanzstelle dem Kunden ausgestellt hat oder die ein übergeordneter Unternehmensverbund, zu dem die jeweilige Akzeptanzstelle gehört, dem Kunden ausgestellt hat. Bei der Kunden-ID handelt es sich dann vorzugsweise um eine Kundennummer. Ebenso ist es grundsätzlich möglich, als Identifikationskarte eine Ausweiskarte (Personalausweis oder Reisepass) oder eine Zahlkarte zu verwenden, also beispielsweise eine Bankkarte, eine EC-Karte, eine Kreditkarte und dergleichen. Hierbei können als Kunden-ID die auf der jeweiligen Zahlkarte ohnehin vorhandenen Daten, wie z.B. Bankverbindung, Name, etc., verwendet werden. Dabei ist klar, dass der jeweilige Kunde zu einem früheren Zeitpunkt mit diesen Daten als Kunden-ID mit seiner Zustimmung registriert worden sein muss, so dass diese Kunden-ID dem Servicesystem zur Individualisierung der Legitimationsausweise zur Verfügung gestellt werden kann.

Die erfindungsgemäßen Verfahren führen zu einer extremen Vereinfachung der Verifikation und Freigabe der Legitimationsausweise, da grundsätzlich auf Standard-Eingabeeinrichtungen bzw. Standard-Einleseeinrichtungen zurückgegriffen werden kann, die bei den in Frage kommenden Akzeptanzstellen ohnehin regelmäßig vorhanden sind.

Bei einer besonderen Ausführungsform kann das Servicesystem dem Legitimationsausweis eine individuelle Ausweis-ID zuordnen und diesen Legitimationsausweis einem durch eine Kunden-ID individualisierbaren Kunden zuordnen. Durch diese Ausführungsform schafft das Servicesystem die Grundlage dafür, dass die Verifikation und Freigabe des jeweiligen Legitimationsausweises grundsätzlich sowohl über die Ausweis-ID als auch über die Kunden-ID alternativ oder kumulativ realisierbar ist.

Dementsprechend kann gemäß einer Weiterbildung der Legitimationsausweis wahlweise durch Eingabe der Ausweis-ID in die Eingabeeinrichtung oder durch Einlesen der Kunden-ID mittels der Identifikationskarte in die Einleseeinrichtung verifizierbar und freigebbar sein. Durch diese Maßnahme ist der jeweilige Kunde unabhängig von der tatsächlich bei der jeweiligen Akzeptanzstelle vorhandenen Hardware, was die Verwendbarkeit der auf der mobilen Telekommunikationseinrichtung gespeicherten Legitimationsausweise verbessert.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

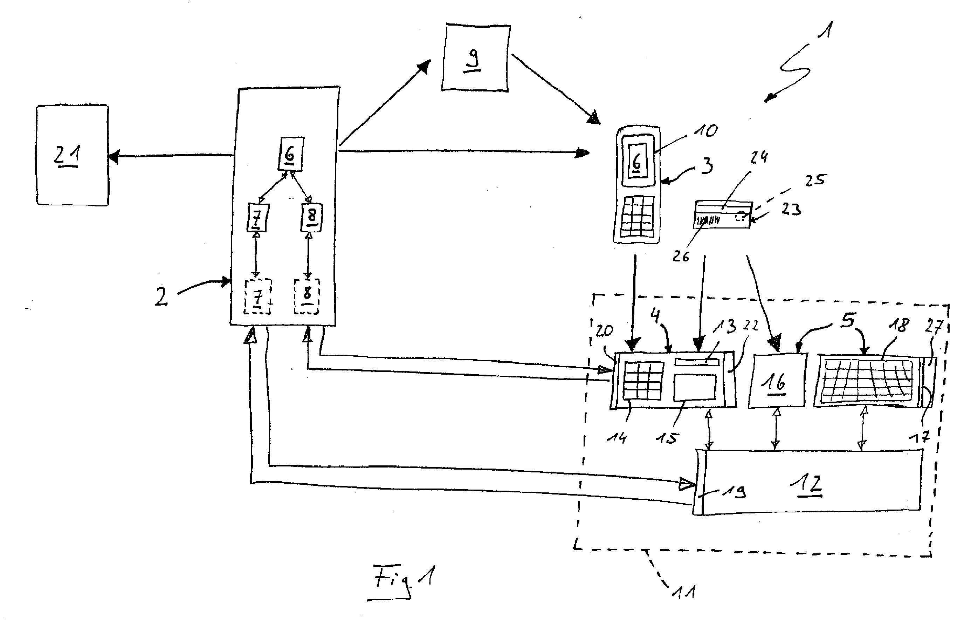

Die einzige Fig. 1 zeigt eine stark vereinfachte, schaltplanartige Prinzipskizze eines Systems mit einem Servicesystem, einer mobilen Telekommunikationseinrichtung sowie einer Eingabe-/Einleseeinrichtung.

Entsprechend Fig. 1 umfasst ein System 1, mit dessen Hilfe Legitimationsausweise verifizierbar und freigebbar sind, ein Servicesystem 2, zumindest eine mobile Telekommunikationseinrichtung 3 sowie zumindest eine Eingabeeinrichtung 4 und/oder eine Einleseeinrichtung 5. Das Servicesystem 2 ist beispielsweise durch einen Computer, insbesondere einen Server, gebildet. Das Servicesystem 2 ist dazu ausgestaltet, dass es Legitimationsausweise 6 versenden kann. Grundsätzlich kann das Servicesystem 2 auch so ausgestaltet sein, dass es die Legitimationsausweise 6 erzeugen kann. Bei diesen Legitimationsausweisen 6 handelt es sich beispielweise um Zahlungsbelege, um Coupons oder um Gutscheine. Es ist klar, dass diese Aufzählung unvollständig ist und ohne Beschränkung der Allgemeinheit genannt ist.

Das Servicesystem 2 ist ferner dazu ausgestaltet, dem jeweiligen Legitimationsausweis 6 eine individuelle Ausweisidentifikation 7 zuzuordnen, die im Folgenden kurz mit Ausweis-ID 7 bezeichnet wird. Bei dieser Ausweis-ID 7 handelt es sich z.B. um einen einfachen alphanumerischen Code, vorzugsweise um einen Zahlencode. Das Servicesystem 2 kann nun den Legitimationsausweis 6 mit der Ausweis-ID 7 verknüpfen und den Legitimationsausweis 6 zusammen mit der Ausweis-ID 7 versenden. Zusätzlich oder alternativ kann das Servicesystem 2 auch so ausgestaltet sein, dass es dem jeweiligen Legitimationsausweis 6 eine Kundenidentifikation 8 zuordnet, die im Folgenden kurz mit Kunden-ID 8 bezeichnet wird. Hierdurch wird einem Kunden, der durch seine Kunden-ID 8 individualisiert ist, ein bestimmter Legitimationsausweis 6 zugeordnet. Das Servicesystem 2 kann nun den Legitimationsausweis 6 so mit der Kunden-ID 8 verknüpfen, dass es den Legitimationsausweis 6 einschließlich einer Information zumindest über die Art der Kunden-ID 8 versendet, mit deren Hilfe der jeweilige Legitimationsausweis 6 verifiziert und freigegebenen werden kann. Die eigentliche Kunden-ID 8 wird dabei vorzugsweise nicht preisgegeben. Beispielsweise handelt es sich bei der Kunden-ID 8 um eine Mobilfunknummer oder um eine Kundenummer des Kunden, mit welcher der Kunde bei einem Unternehmen registriert ist. Die vom Legitimationsausweis 6 umfasste Information besagt dann in einer für den Kunden ohne weitere Hilfsmittel lesbaren Form beispielsweise nur, dass die Verifikation und Freigabe mit Hilfe der Kundennummer durchzuführen ist, ohne dass dabei die konkrete Kundenummer für den Kunden erkennbar ist. Es ist klar, dass die Kunden-ID 8 in verschlüsselter oder nicht sichtbarer Form von der Information umfasst sein kann.

Das Servicesystem 2 kann im Auftrag eines Unternehmens Legitimationsausweise 6 erstellen bzw. versenden. Beispielsweise sendet das Servicesystem 2 die Legitimationsausweise 6 an einen Verteiler 9, insbesondere ein Rechner. Der Verteiler 9 gehört beispielsweise zu einem Unternehmen, das selbst die Legitimationsausweise 6 an die Kunden versenden möchte. Der Versand vom Servicesystem 2 an den Verteiler 9 erfolgt beispielsweise über eine Datenfernübertragung z.B. mittels ISDN, DSL, Internet, GPRS, UMTS oder dergleichen.

Der Verteiler 9 versendet nun die Legitimationsausweise 6 an die ausgewählten Kunden, und zwar jeweils an deren mobile Telekommunikationseinrichtung 3. Hierbei handelt es sich vorzugsweise um ein Mobiltelefon oder um einen tragbaren Computer oder um einen Taschencomputer oder elektronischen Organizer, jeweils mit einer Telekommunikationsschnittstelle. Auch diese Aufzählung dient nicht zur Beschränkung der Allgemeinheit und ist insbesondere nicht abgeschlossen. Im Folgenden wird jedoch bevorzugt von einem Mobiltelefon gesprochen. Der Verteiler 9 sendet somit eine Nachricht, die den Legitimationsausweis 6 darstellt, an das Mobiltelefon 3 des jeweiligen Kunden. Alternativ kann auch das Servicesystem 2 die den Legitimationsausweis 6 darstellende Nachricht direkt an das Mobiltelefon 3 des jeweiligen Kunden senden. Die Übermittlung dieser Nachricht erfolgt bevorzugt in Form von SMS oder MMS oder WLAN. Grundsätzlich ist jedoch auch eine Übermittlung in Form einer E-Mail denkbar. Desweiteren können mobile Telekommunikationseinrichtungen 3 regelmäßig auch Faxsendungen entgegennehmen, sofern diese entsprechend modifiziert sind.

Nach der Übertragung der den Legitimationsausweis 6 darstellenden Nachricht ist der jeweilige Legitimationsausweis 6 im Mobiltelefon 3 gespeichert. Insbesondere kann der gespeicherte Legitimationsausweis 6 an einem Display 10 des Mobiltelefons 3 dargestellt werden.

In Fig. 2 ist eine Akzeptanzstelle 11 durch einen mit unterbrochener Linie gezeichneten Rahmen symbolisiert. Eine derartige Akzeptanzstelle 11, insbesondere ein Einzelhändler, charakterisiert sich dadurch, dass sie die Legitimationsausweise 6 akzeptiert. Beispielsweise handelt es sich bei der Akzeptanzstelle 11 um dasjenige Unternehmen bzw. um eine Filiale desjenigen Unternehmens, das den Versand der Legitimationsausweise 6 veranlasst hat. Ebenso kann die Akzeptanzstelle 11 in einem Verband von Unternehmen organisiert sein, wobei dann der Verband oder ein anderes Mitglied dieses Verbands den Versand der Legitimationsausweise 6 veranlasst hat.

Die Akzeptanzstelle 11 weist im Bereich eines Kassensystems 12 die Eingabeeinrichtung 4 bzw. die Einleseeinrichtung 5 auf. Ein solches Kassensystem 12 umfasst in der Regel eine Kasse, an welcher der jeweilige Kunde seinen Einkauf mit Bargeld bezahlen kann. Darüber hinaus sind moderne Kassensysteme 12 regelmäßig mit Einrichtungen zur bargeldlosen Bezahlung der Einkäufe ausgestattet. Zumindest bei der Eingabeeinrichtung 4 kann es sich vorzugsweise um eine derartige, ohnehin im Bereich des Kassensystems 12 vorhandene Einrichtung zum bargeldlosen Bezahlen handeln. Derartige Eingabeeinrichtungen 4 sind zwischenzeitlich bei fast allen Einzelhändlern verfügbar und somit grundsätzlich auch bei den in Frage kommenden Akzeptanzstellen 11.

Insoweit können die Eingabeeinrichtung 4 bzw. die Einleseeinrichtung 5 einen Bestandteil des Kassensystems 12 bilden. Zumindest können die Eingabeeinrichtung 4 bzw. die Einlesseinrichtung 5 an das Kassensystem 12 angeschlossen sein.

Eine derartige Eingabeeinrichtung 4 umfasst üblicherweise einen Kartenleser 13, z.B. in Form eines Schlitzes, in welchen eine Zahlkarte einsteckbar ist, eine numerische Tastatur 14 und optional ein Display 15. Mit Hilfe des Kartenlesers 13 können Daten, die auf der jeweiligen Zahlkarte gespeichert sind, von der Eingabeeinrichtung 4 eingelesen werden. Die Eingabeeinrichtung 4 ist mit einer Datenübertragungseinrichtung 20 bzw. mit einer Telekommunikationsschnittstelle 20 ausgestattet, über die die Eingabeeinrichtung 4 z.B. mit dem zuvor genannten Zahlsystem und mit dem Servicesystem 2 eine Verbindung herstellen kann, die eine Datenübertragung ermöglicht.

Bei der Zahlkarte handelt es sich beispielsweise um eine Bankkarte oder um einen EC-Karte oder um eine Kreditkarte. Auch hier ist dies Aufzählung wieder ohne Beschränkung der Allgemeinheit und ohne Anspruch auf Vollständigkeit. Bei den einlesbaren Daten handelt es sich beispielsweise um den Namen des Karteninhabers sowie um dessen Bankverbindung oder Kartennummer. Die Daten sind beispielsweise in einem Magnetstreifen oder in einem Speicherchip gespeichert.

Die Eingabeeinrichtung 4 kommuniziert für einen bargeldlosen Zahlungsvorgang mit einem Zahlsystem, beispielsweise mit einem Bankrechner, um beispielsweise die Gültigkeit der Zahlkarten zu verifizieren. Sofern der Kunde einen der jeweiligen Zahlkarte zugeordneten PIN (Persönliche IdentifikationsNummer) eingeben muss, kann er dies über die Tastatur 14 tun. Im Zahlsystem erfolgt dann eine Überprüfung der PIN und gegebenenfalls die Freigabe der Zahlung. Diese Art des bargeldlosen Zahlungsverkehrs im Einzelhandel ist weitverbreitet und weitgehend bekannt. Die Erfindung nutzt diese Standard-Eingabeeinrichtungen 4, um damit die Legitimationsausweise 6 verifizieren und freigeben zu können. Die Nutzung ohnehin vorhandener peripherer Geräte bedeutet für die Akzeptanzstellen 11 keine zusätzliche Investition, wodurch sich die Verwendung von Legitimationsausweisen 6 erheblich vereinfacht.

Die Einleseeinrichtung 5 kann grundsätzlich auf einzelnen Komponenten des Kassensystems 12 beruhen. Beispielsweise nutzt die Einleseeinrichtung 5 einen Laserscanner 16. Mit Hilfe dieses Scanners 16 kann das Kassensystem 12 Strichcodes einlesen, die an den Produkten des jeweiligen Einkaufs angebracht sind. Über das Einscannen der Produkte bzw. deren Strichcodes, kann die zu bezahlende Summe automatisch generiert werden. Auch derartige Scanner 16 sind bei Kassensystemen 12 im Einzelhandel weit verbreitet. Ferner kann auch hier ein Kartenleser 17 vorgesehen sein, beispielsweise in Form eines Schlitzes, durch den die jeweilige Karte hindurchziehbar ist. Auch derartige Kartenleser 17 können bei modernen Kassensystemen 12 regelmäßig vorhanden sein, beispielsweise zum Einlesen einer Kundenkarte oder auch zum Einlesen einer Zahlkarte. Desweiteren weist die Einleseeinrichtung 5 über das Kassensystem 12 eine Tastatur 18 auf. Außerdem kann das Kassensystem 12 eine Telekommunikationsschnittstelle 19 bzw. eine Datenübertragungseinrichtung 19 aufweisen, auf die die Einleseeinrichtung 5 ebenfalls Zugriff hat.

Das erfindungsgemäße Verfahren bzw. das hier gezeigte System 1 arbeitet wie folgt:

Ein Unternehmen möchte an einen einzelnen Kunden oder an einen vorbestimmten Kundenkreis Legitimationsausweise 6 versenden, die bei einer bestimmten Akzeptanzstelle 11 oder bei einer vorgegebenen Gruppe von Akzeptanzstellen 11 gültig sein sollen. Beispielsweise handelt es sich beim Legitimationsausweis 6 um einen Einkaufsgutschein, den der jeweilige Kunde bei einer beliebigen Filiale, also Akzeptanzstelle 11, eines bestimmten Unternehmens einlösen kann.

Das Servicesystem 2 ordnet diesem Legitimationsausweis 6 die individuelle Ausweis-ID 7 zu. Alternativ, bevorzugt jedoch zusätzlich, ordnet das Servicesystem 2 dem jeweiligen Legitimationsausweis 6 einen bestimmten Kunden zu, indem sie den jeweiligen Legitimationsausweis 6 einer diesen Kunden individualisierenden Kunden-ID 8 zuordnet.

Anschließend wird eine Nachricht, die den Legitimationsausweis 6 einschließlich der Ausweis-ID 7 und/oder einschließlich eines Hinweises, das die Verifikation und Freigabe dieses Legitimationsausweises 6 durch die Kunden-ID 8 erfolgen kann oder muss, darstellt, entweder direkt oder über den Verteiler 9 an das Mobiltelefon 3 des betreffenden Kunden gesendet. Die Übertragung dieser Nachricht erfolgt bevorzugt über SMS, MMS oder WLAN. Die Nachricht bzw. der Legitimationsausweis 6 ist anschließend im Mobiltelefon 3 gespeichert und kann am Display 10 dargestellt werden. Der Kunde kann erkennen, ob er den Legitimationsausweis 6 nur mit der Ausweis-ID 7 oder nur mit der Kunden-ID 8 oder wahlweise mit einem von beiden verifizieren und freigeben kann.

Wenn der Kunde den jeweiligen Legitimationsausweis 6 bei einer geeigneten Akzeptanzstelle 11 einsetzen möchte, also beispielsweise seinen Einkaufsgutschein einlösen möchte, kann er dies wie folgt tun. Wenn der Legitimationsausweis 6 die Möglichkeit bietet, ihn mit Hilfe der Ausweis-ID 7 zu verifizieren und freizugeben, kann der Kunde die Ausweis-ID 7 in die Eingabeeinrichtung 4 der Akzeptanzstelle 11 eingeben. Der Kassierer bzw. die Kassiererin der Akzeptanzstelle 11 gibt über das Kassensystem 12 vor, dass ein (bestimmter) Legitimationsausweis 6 verwendet bzw. ein Einkaufsgutschein eingelöst werden soll, der über die Ausweis-ID 7 verifiziert und freigegeben werden soll. Die Eingabeeinrichtung 4 verarbeitet diese Information und fordert den Kunden über das Display 15 auf, die Ausweis-ID 7 einzugeben. Der Kunde kann die Ausweis-ID 7, die bevorzugt eine Zahlenfolge ist, über die Tastatur 14 der Eingabeeinrichtung 4 eingeben. Sobald der Kunde die Eingabe bestätigt, kann die Eingabeeinrichtung 4 selbsttätig die Verifikation Freigabe des Legitimationsausweises 6 durchführen. Hierzu sendet die Eingabeeinrichtung 4 über ihre Telekommunikationsschnittstelle 20 eine die Ausweis-ID 7 umfassende Information an das Servicesystem 2. Diese Datenübertragung erfolgt beispielsweise über ISDN, DSL, Internet, GPRS, UMTS oder eine beliebige andere Datenverbindung. Das Servicesystem 2 kann nun die durch einen mit unterbrochener Linie gezeichneten Rahmen angedeutete Ausweis-ID 7 daraufhin überprüfen, ob für diese Ausweis-ID 7 vom Servicesystem 2 ein Legitimationsausweis 6 erstellt worden ist. Ist dies der Fall, kann der jeweilige Legitimationsausweis 6 freigegeben werden. Ist das Ergebnis dieser Verifikation negativ, erfolgt keine Freigabe des Legitimationsausweises 6. Das Servicesystem 2 verifiziert somit den Legitimationsausweis 6 anhand der Ausweis-ID 7. Sofern die Legitimation positiv endet, sendet das Servicesystem 2 eine die Freigabe des Legitimationsausweises 6 repräsentierende Information an die Eingabeeinrichtung 4 zurück. Anschließend kann die Eingabeeinrichtung 4 den Legitimationsausweis 6 freigeben. Diese Freigabe erfolgt z.B. gegenüber dem Kassensystem 12, so dass der Vorgang "Verwenden des Legitimationsausweises 6" bzw. "Einlösen des Einkaufsgutscheins" abgeschlossen werden kann.

Mit der Freigabe des Legitimationsausweises 6 durch das Servicesystem 2 kann das Servicesystem 2 eine dazu korrespondierende Information an ein Datenverarbeitungssystem 21 übermitteln, z.B. via ISDN, DSL, Internet, GPRS, UMTS oder über eine andere Datenverbindung. Dieses Datenverarbeitungssystem 21 kann für vielfältige statistische Zwecke verwendet werden. Es kann zur jeweiligen Akzeptanzstelle 11 gehören oder zu einer die Legitimationsausweise 6 ausgebenden Vergabestelle. Hierdurch können Kundenverhalten und der Einsatz der Legitimationsausweise 6 ausgewertet werden.

Weiter entwickelte Eingabeeinrichtungen 4 können grundsätzlich auch mit einer zusätzlichen Telemetrieschnittstelle 22 ausgestattet sein, die einen elektronischen Datenaustausch zwischen dem Mobiltelefon 3 und der Eingabeeinrichtung 4 ermöglicht, z.B. via Funk, Infrarot und dergleichen. Moderne Mobiltelefone 3 sind mit derartigen Schnittstellen ohnehin ausgestattet. Somit ist es grundsätzlich möglich, die jeweilige Ausweis-ID 7 über die Telemetrieschnittstelle 22 in die Eingabeeinrichtung 4 einzugeben.

Sofern die Möglichkeit besteht, den Legitimationsausweis 6 mit Hilfe der Kunden-ID 8 zu verifizieren und freizugeben, kann der Kunde die jeweilige Kunden-ID 8 mit Hilfe einer I-dentitätskarte 23 der jeweiligen Akzeptanzstelle 11 mitteilen. Die Kunden-ID 8 ist auf der Identifikationskarte 23 in einer beliebigen, geeigneten Weise angebracht. Beispielsweise ist die Kunden-ID 8 elektronisch in einem an der Identifikationskarte 23 angebrachte Magnetsteifen 24 oder in einem in die Identifikationskarte 23 integrierten Speicherchip 25 gespeichert. Ebenso kann die Kunden-ID 8 in Form eines Strichcodes 26 oder als alphanumerische Zeichenfolge auf die Identifikationskarte 23 aufgedruckt sein. Vorzugsweise handelt es sich bei der Identifikationskarte 23 um eine auf den speziellen Kunden ausgestellte Kundenkarte. Die Kunden-ID 8 ist dann vorzugsweise eine Kundenummer. Ebenso kann es sich bei der Identifikationskarte 23 um eine Ausweiskarte, wie z.B. Personalausweis oder Reisepass, um einen Führerschein oder auch um eine Zahlkarte handeln, wie z.B. Bankkarte, EC-Karte, Kreditkarte oder dergleichen. Die Kunden-ID 8 ist dann z.B. durch Daten der Bankverbindung und/oder durch den Kundennamen oder dergleichen typischer Weise auf der jeweiligen Karte gespeicherter Daten gebildet.

Die Verwendung einer Identifikationskarte 23 vereinfacht die Eingabe der Kunden-ID 8 in das jeweilige System der Akzeptanzstelle 11. Beispielsweise kann der Strichcode 26 vom Scanner 16 der Einleseeinrichtung 5 bzw. des Kassensystems 12 eingelesen werden. Ebenso kann der Magnetstreifen 24 durch den Kartenleser 17 der Einleseeinrichtung 5 bzw. des Kassensystems 12 gelesen werden. Die jeweilige Kunden-ID 8 wird dann elektronisch erfasst. Ebenso ist es grundsätzlich möglich, die gegebenenfalls auf der Identifikationskarte 23 konkret angegebenen Kunden-ID 8 über die Tastatur 18 der Einleseeinrichtung 5 bzw. des Kassensystems 12 einzugeben. Sobald die Kunden-ID 8 eingegeben ist, kann die Einleseeinrichtung 5 bzw. das Kassensystem 12 selbsttätig die Verifikation des Legitimationsausweises 6 durchführen. Hierzu sendet das Kassensystem 12 bzw. die Einleseeinrichtung 5 über die Telekommunikationsschnittstelle 19 eine Information, welche die Kunden-ID 8 umfasst, an das Servicesystem 2. Die Datenübertragung erfolgt beispielsweise über ISDN, DSL, Internet, GPRS, UMTS oder eine beliebige andere Datenverbindung. Das Servicesystem 2 kann nun die durch einen mit unterbrochene Linie gezeichneten Rahmen repräsentierte Kunden-ID 8 mit derjenigen Kunden-ID 8 abgleichen, für die ein Legitimationsausweis 6 erstellt worden ist. Ist diese Verifikation erfolgreich, kann ein entsprechendes Freigabesignal an die Einleseeinrichtung 5 bzw. an das Kassensystem 12 übermittelt werden. Die Einleseeinrichtung 5 bzw. das Kassensystem 12 gibt dann den Legitimationsausweis 6 frei.

Grundsätzlich ist es auch möglich, die auf der Identifikationskarte 23 vorhandene Kunden-ID 8 mit Hilfe der Eingabeeinrichtung 4 elektronisch einzulesen oder gegebenenfalls manuell einzugeben. Hierzu kann die Identifikationskarte 23 beispielsweise in den Kartenleser 13 der Eingabeeinrichtung 4 eingesteckt werden. Bei einer derartigen Ausführungsform spricht die Eingabeeinrichtung 4 der Einleseeinrichtung 5 oder umgekehrt.

Die Verwendung der Identifikationskarte 23 in Verbindung mit der Kunden-ID 8 macht den Kunden beim Verwenden des Legitimationsausweises 6 bzw. beim Einlösen des Einkaufsgutscheins unabhängig von seinen Mobiltelefon 3.

Bei modernen Kassensystemen 12, die insbesondere dazu ausgestattet sind, einen bargeldlosen Zahlungsverkehr abzuwickeln, kann die Ausweis-ID 7 auch über die Tastatur 18 des Kassensystems 12 bzw. der Einleseeinrichtung 5 manuell eingegeben werden oder über eine entsprechende Telemetrieschnittstelle 23 elektronisch eingegeben werden. Eine separate Eingabeeinrichtung 4 ist dann entbehrlich. Diese ist dann in die Einleseeinrichtung 5 bzw. in das Kassensystem 12 integriert.

Bemerkenswert für das erfindungsgemäße Verfahren bzw. für das erfindungsgemäße System 1 ist, dass seitens der jeweiligen Akzeptanzstelle 11 Komponenten, nämlich die Eingabeeinrichtung 4 bzw. die Einleseeinrichtung 5 bzw. das Kassensystem 12, die normalerweise dazu dienen, einen bargeldlosen Zahlungsverkehr durch Telekommunikation mit einem Zahlsystem zu ermöglichen, dazu verwendet werden, eine Telekommunikation mit dem Servicesystem 2 durchzuführen, um den jeweiligen Legitimationsausweis 6 zu verifizieren und gegebenenfalls freizugeben. Die Ansteuerung der jeweiligen Telekommunikationseinrichtung 19, 20, um eine Datenverbindung anstelle mit dem Zahlsystem mit dem Servicesystem 2 aufzubauen, erfolgt, insbesondere automatisch über das Kassensystem 12.

## Patentansprüche

1. Verfahren zum Verifizieren und Freigeben von in mobilen Telekommunikationseinrichtungen (3), z.B. Mobiltelefonen, gespeicherten Legitimationsausweisen (6), wie z.B. Zahlungsbelege, Coupons, Gutscheine und der gleichen, bei einer Akzeptanzstelle (11) für derartige Legitimationsausweise (6),
- bei dem ein Servicesystem (2) einem Legitimationsausweis (6) eine individuelle Ausweisidentifikation (7) zuordnet,
- bei dem eine Nachricht, die den die Ausweisidentifikation (7) aufweisenden Legitimationsausweis (6) darstellt, an eine mobile Telekommunikationseinrichtung (3) eines Kunden gesendet wird,
- bei dem die Ausweisidentifikation (7) in eine Eingabeeinrichtung (4) einer den Legitimationsausweis (6) akzeptierenden Akzeptanzstelle (11) eingegeben wird,
- bei dem eine die Ausweisidentifikation (7) umfassende Information an das Servicesystem (2) gesendet wird,
- bei dem der Legitimationsausweis (6) durch das Servicesystem (2) anhand der Ausweisidentifikation (7) verifiziert wird,
- bei dem eine eine Freigabe des Legitimationsausweises (6) repräsentierende Information an die Eingabeeinrichtung (4) gesendet wird,
- bei dem der Legitimationsausweis (6) durch die Eingabeeinrichtung (4) freigegeben wird.

2. Verfahren zum Verifizieren und Freigeben von in mobilen Telekommunikationseinrichtungen (3), z.B. Mobiltelefonen, gespeicherten Legitimationsausweisen (6), wie z.B. Zahlungsbelege, Coupons, Gutscheine und dergleichen, bei einer Akzeptanzstelle (11) für derartige Legitimationsausweise (6),
- bei dem ein Servicesystem (2) einem durch eine Kundenidentifikation (8) individualisierten Kunden einen Legitimationsausweis (6) zuordnet,
- bei dem eine Nachricht, die den Legitimationsausweis (6) darstellt, an eine mobile Telekommunikationseinrichtung (3) des jeweiligen Kunden gesendet wird,
- bei dem die Kundenidentifikation (8) von einer die Kundenidentifikation (8) aufweisenden Identifikationskarte (23) des jeweiligen Kunden in eine Einleseeinrichtung (5) einer den Legitimationsausweis (6) akzeptierenden Akzeptanzstelle (11) eingelesen wird,
- bei dem eine die Kundenidentifikation (8) umfassende Information an das Servicesystem (2) gesendet wird,
- bei dem der Legitimationsausweis (6) durch das Servicesystem (2) anhand der Kundenidentifikation (8) verifiziert wird,
- bei dem eine eine Freigabe des Legitimationsausweises (6) repräsentierende Information an die Einleseeinrichtung (5) gesendet wird,
- bei der Legitimationsausweis (6) durch die Einleseeinrichtung (5) freigegebenen wird.

3. Verfahren nach Anspruch 1 oder 2,
**dadurch gekennzeichnet,**
**dass** das Servicesystem (2) dem Legitimationsausweis (6) eine individuelle Ausweisidentifikation (7) zuordnet und diesen Legitimationsausweis (6) einem durch eine Kundenidentifikation (8) individualisierbaren Kunden zuordnet.

4. Verfahren nach den Ansprüchen 1 bis 3,
**dadurch gekennzeichnet,**
**dass** der Legitimationsausweis (6) wahlweise durch Eingabe der Ausweisidentifikation (7) in die Eingabeeinrichtung (4) oder durch Einlesen der Kundenidentifikation (8) mittels der Identifikationskarte (23) in die Einleseeinrichtung (5) verifizierbar und freigebbar ist.

5. Verfahren nach einem der Ansprüche 1 bis 4,
**dadurch gekennzeichnet,**
**dass** die Eingabeeinrichtung (4) und/oder die Einleseeinrichtung (5) Bestandteil eines Kassensystems (12) der Akzeptanzstelle (11) ist/sind oder an ein Kassensystem (12) der Akzeptanzstelle (11) angeschlossen ist/sind.

6. Verfahren nach einem der Ansprüche 1 bis 5,
**dadurch gekennzeichnet,**
- **dass** die Ausweisidentifikation (7) durch einen Zahlencode gebildet ist,
- **dass** die Eingabeeinrichtung (4) eine numerische Tastatur (14) zum Eingeben der Ausweisidentifikation (7) aufweist.

7. Verfahren nach einem der Ansprüche 1 bis 6,
**dadurch gekennzeichnet,**
- **dass** die Kundenidentifikation (8) an der Identifikationskarte (23) durch einen Buchstaben- und/oder Zahlencode und/oder durch einen Strichcode (26) angebracht und/oder in einem Magnetstreifen (24) und/oder in einem Speicherchip (25) elektronisch gespeichert ist,
- **dass** die Einleseeinrichtung (5) eine Tastatur (18) zum Eingeben eines Buchstaben- und/oder Zahlencodes und/oder eine Strichcodeleseeinrichtung (16) und/oder eine Magnetstreifenleseeinrichtung (17) und/oder eine Speicherchipleseeinrichtung aufweist.

8. Verfahren nach einem der Ansprüche 1 bis 7,
**dadurch gekennzeichnet,**
- **dass** die Eingabeeinrichtung (4) in die Einleseeinrichtung (5) integriert ist, oder
- **dass** die Einleseeinrichtung (5) in die Eingabeeinrichtung (4) integriert ist.

9. Verfahren nach einem der Ansprüche 1 bis 8,
**dadurch gekennzeichnet,**
**dass** die Eingabeeinrichtung (4) und/oder die Einleseeinrichtung (5) eine Telekommunikationsschnittstelle (19; 20) zum Herstellen einer Datenübertragungsverbindung mit dem Servicesystem (2) oder mit einem Zahlsystem, eine Kartenleseeinheit (13; 17) zum Einlesen von auf einem Magnetstreifen (24) und/oder in einem Speicherchip (25) einer Zahlkarte, wie z.B. Bankkarte, EC-Karte, Kreditkarte und dergleichen, gespeicherten Zahldaten, und eine Tastatur (14; 18) zum Eingeben eines der Zahlkarte zugeordneten Zahlencodes aufweist/aufweisen.

10. Verfahren nach den Ansprüchen 5 und 9,
**dadurch gekennzeichnet,**
**dass** die Eingabeeinrichtung (4) und/oder die Einleseeinrichtung (5) über das Kassensystem (12) wahlweise zum Herstellen einer Datenübertragungsverbindung mit dem Servicesystem (2) oder mit dem Zahlensystem ansteuerbar ist/sind.

11. Verfahren nach einem der Ansprüche 1 bis 10,
**dadurch gekennzeichnet,**
**dass** das Servicesystem (2) in Abhängigkeit der Freigabe eines Legitimationsausweises (6) eine dazu korrespondierende Information an ein Datenverbarbeitungssystem (21) der Akzeptanzstelle (11) oder einer die Legitimationsausweise (6) vergebenden Vergabestelle sendet.

12. Verfahren nach einem der Ansprüche 1 bis 11,
**dadurch gekennzeichnet,**
**dass** die Identifikationskarte (23) eine Zahlkarte, wie z.B. Bankkarte, EC-Karte, Kreditkarte und dergleichen, oder eine Kundenkarte oder eine Ausweiskarte, z.B. Personalausweis oder Reisepass, oder ein Führerschein ist.
